(19) Europäisches Patentamt / European Patent Office / Office européen des brevets

(11) **EP 1 908 348 A1**

(12) **EUROPEAN PATENT APPLICATION**
published in accordance with Art. 153(4) EPC

(43) Date of publication:
**09.04.2008 Bulletin 2008/15**

(51) Int Cl.:
*A01N 25/14* (2006.01)   *A01N 25/30* (2006.01)
*A01N 43/40* (2006.01)   *A01N 43/60* (2006.01)
*A01N 43/76* (2006.01)

(21) Application number: **05750868.1**

(22) Date of filing: **15.06.2005**

(86) International application number:
**PCT/JP2005/010968**

(87) International publication number:
**WO 2006/134651 (21.12.2006 Gazette 2006/51)**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **Nissan Chemical Industries, Ltd.
Chiyoda-ku,
Tokyo 101-0054 (JP)**

(72) Inventors:
• **KOBAYASHI, Mamoru
722-1, Tsuboi-cho, Funabashi-shi,
Chiba 274-8507 (JP)**

• **FURUSAWA, Hiroyuki
722-1, Tsuboi-cho, Funabashi-shi, Chiba
274-8507 (JP)**
• **CHUBACHI, Masaru
722-1, Tsuboi-cho, Funabashi-chi, Chiba
274-8507 (JP)**

(74) Representative: **HOFFMANN EITLE
Patent- und Rechtsanwälte
Arabellastrasse 4
81925 München (DE)**

(54) **AGRICULTURAL-CHEMICAL GRANULATED WETTABLE POWDER AND PROCESS FOR PRODUCING THE SAME**

(57)   A water dispersible agricultural chemical granule having good productivity and dispersion stability in water and a method of producing the same are provided. A water dispersible agricultural chemical granule produced by spray drying after wet pulverization of a suspension containing an agricultural chemical active component having a melting point ranging from 55 to 100°C, a surfactant and water, with a drying loss of the water dispersible agricultural chemical granule ranging from 0.1 to 5.0% by mass. A method of producing a water dispersible agricultural chemical granule including spray drying after wet pulverization of a suspension containing an agricultural chemical active component having a melting point ranging from 55 to 100°C, a surfactant and water so as to obtain the water dispersible agricultural chemical granule having drying loss ranging from 0.1 to 5.0% by mass.

EP 1 908 348 A1

**Description**

TECHNICAL FIELD

The present invention relates to a water dispersible agricultural chemical granule and a method of producing the same.

BACKGROUND ART

In a case where an agricultural chemical active component which is solid at room temperature is formed to a water dispersible granule, a method has been known, in which the water dispersible granule is formed with an extruding granulator after various auxiliary agents and the like are added to a dry pulverized agricultural chemical active component with a jet mill and other milling machines (for example, see Patent Document 1). However, an agricultural chemical active component having a comparatively low melting point may cause several problems such as less yield of pulverized active components due to adhering to the inside of a milling machine during dry pulverization, and storage stability of the obtained water dispersible granule. In addition, in a case where the agricultural chemical active component is pulverized with dry pulverization, its average particle size becomes 3 $\mu$m or more. This may provide insufficient biological effects (for example, see Patent Document 2).
On the other hand, it has been known that a water dispersible agricultural chemical granule is manufactured by spray drying after an agricultural chemical active component is pulverized under a wet condition (for example, see Patent Documents 3, 4, and 5). However, the relation between drying loss of the water dispersible agricultural chemical granule and dispersion stability in water is not known.

    Patent Document 1: JP-A-62-263101 (1987)
    Patent Document 2: JP-A-59-029604 (1984)
    Patent Document 3: JP-A-60-064904 (1985)
    Patent Document 4: JP-A-63-022502 (1988)
    Patent Document 5: JP-A-01-226803 (1989)

DISCLOSURE OF THE INVENTION

Problems to be Solved by the Invention

An object of the present invention is to provide a water dispersible agricultural chemical granule containing an agricultural chemical active component having a melting point ranging from 55 to 100°C, which has good productivity and dispersion stability in water, and a method of producing the same.

Means for Solving the Problem

The inventors of the present invention has found that the water dispersible agricultural chemical granule produced by spray drying after wet pulverization of a suspension containing a low-melting-point agricultural chemical active component, a surfactant and water has poor dispersion stability in water. As a result of an intensive investigation aimed at resolving the problems described above, the inventors of the present invention has discovered that a water dispersible agricultural chemical granule having good dispersion stability in water can be produced by spray drying after wet pulverization of a suspension containing an agricultural chemical active component having a melting point ranging from 55 to 100°C, a surfactant and water, as well as controlling drying loss of the water dispersible agricultural chemical granule to 0.1 to 5.0%. The inventors of the present invention have also discovered that if the suspension contains both an anionic surfactant and a nonionic surfactant, viscosity of the suspension is lowered. This phenomena increases productivity of a water dispersible agricultural chemical granule due to the improvement of suspension sending efficiency at spray drying and reduction of clogging of a spray nozzle. Furthermore, the inventors of the present invention have discovered if a water dispersible agricultural chemical granule contains surfactants consisted of sodium dioctyl sulfosuccinate, sodium lignin sulfonate, polyoxypropylene (mono-, di-, or tri-) styryl phenyl ether and a polyoxyethylene-polyoxypropylene block polymer, the dispersion stability in water is improved. Moreover, the inventors of the present invention have discovered that the dispersion stability in water is further improved by controlling the hot-air inlet temperature at spray drying to lower than or equal to the melting point of the agricultural chemical active component.
That is, the present invention relates to water dispersible agricultural chemical granules and a method of producing the same described in the following (1) to (20).

(1) A water dispersible agricultural chemical granule produced by spray drying after wet pulverization of a suspension containing an agricultural chemical active component having a melting point ranging from 55 to 100°C, a surfactant and water, with a drying loss of the water dispersible agricultural chemical granule ranging from 0.1 to 5.0% by mass.

(2) The water dispersible agricultural chemical granule according to the description (1) in which the drying loss is ranging from 0.1 to 3.0% by mass.

(3) The water dispersible agricultural chemical granule according to the descriptions (1) or (2) in which the meting point of the agricultural chemical active component is ranging from 70 to 90°C.

(4) The water dispersible agricultural chemical granule according to any one of the descriptions (1) to (3) in which a volume median diameter of a dispersed substance in an aqueous dispersion prepared by diluting the water dispersible agricultural chemical granule with water is ranging from 0.1 to 3.0 μm.

(5) The water dispersible agricultural chemical granule according to any one of the descriptions (1) to (4) in which the surfactant is consisted of an anionic surfactant and a nonionic surfactant.

(6) The water dispersible agricultural chemical granule according to the description (5) in which the anionic surfactant is one or more selected from a group consisting of an unsaturated carboxylic acid type surfactant and a sulfonic acid type surfactant.

(7) The water dispersible agricultural chemical granule according to the description (5) in which the anionic surfactant is one or more selected from a group consisting of a dialkyl sulfosuccinate, a lignin sulfonate, an alkyl naphthalene sulfonate and a polycarboxylate.

(8) The water dispersible agricultural chemical granule according to the description (5) in which the anionic surfactant is one or more selected from a group consisting of a dialkyl sulfosuccinate and a lignin sulfonate.

(9) The water dispersible agricultural chemical granule according to the description (5) in which the nonionic surfactant is a polyethylene glycol type surfactant.

(10) The water dispersible agricultural chemical granule according to the description (5) in which the nonionic surfactant is one or more selected from a group consisting of polyoxyethylene (mono-, di-, or tri-) styryl phenyl ether and a polyoxyethylene-polyoxypropylene block polymer.

(11) The water dispersible agricultural chemical granule according to any one of the descriptions (1) to (4) in which the surfactant is consisted of a dialkyl sulfosuccinate, a lignin sulfonate, polyoxyethylene (mono-, di-, or tri-) styryl phenyl ether and a polyoxyethylene-polyoxypropylene block polymer.

(12) The water dispersible agricultural chemical granule according to any one of the descriptions (1) to (11) in which the agricultural chemical active component is a herbicide.

(13) The water dispersible agricultural chemical granule according to the description (12) in which the herbicide is a phenoxypropionic acid type compound.

(14) The water dispersible agricultural chemical granule according to the description (12) in which the herbicide is one or more selected from a group consisting of quizalofop-ethyl, quizalofop-P-ethyl, quizalofop-P-tefuryl, fenoxaprop-ethyl, fenoxaprop-P-ethyl, propaquizalofop, haloxyfop-methyl and haloxyfop-ethyl.

(15) The water dispersible agricultural chemical granule according to the description (12) in which the herbicide is quizalofop-P-ethyl.

(16) The water dispersible agricultural chemical granule according to any one of the descriptions (1) to (15) in which a hot-air inlet temperature at spray drying is lower than or equal to the melting point of the agricultural chemical active component.

(17) The water dispersible agricultural chemical granule according to any one of the descriptions (1) to (16) in which the water dispersible agricultural chemical granule is produced by being redried after spray drying.

(18) A method of producing a water dispersible agricultural chemical granule, including: spray drying after wet pulverization of a suspension containing an agricultural chemical active component having a melting point ranging from 55 to 100°C, a surfactant and water so as to obtain the water dispersible agricultural chemical granule having drying loss ranging from 0.1 to 5.0% by mass.

(19) The method of producing a water dispersible agricultural chemical granule according to the description (18) in which a hot-air inlet temperature at spray drying is lower than or equal to the melting point of the agricultural chemical active component.

(20) The method of producing a water dispersible agricultural chemical granule according to the description (18) further including: redrying the water dispersible agricultural chemical granule after spray drying so as to obtain the water dispersible agricultural chemical granule having the drying loss ranging from 0.1 to 5.0% by mass.

Effects of the Invention

A water dispersible agricultural chemical granule of the present invention containing an agricultural chemical active component whose melting point is ranging from 55 to 100°C has excellent productivity and dispersion stability in water.

BEST MODES FOR CARRYING OUT THE INVENTION

Drying loss of a water dispersible agricultural chemical granule of the present invention is needed to be controlled from 0.1 to 5.0% by mass, preferably from 0.1 to 3.0% by mass, in order to obtain good dispersion stability in water of the water dispersible agricultural chemical granule. A value of drying loss is measured by setting drying temperature to 105°C with use of FD-240 infrared moisture determination balance (detection of weight loss by heating and drying), manufactured by Kett Electric Laboratory.

Drying loss of the water dispersible agricultural chemical granule of the present invention can be controlled to 0.1 to 5.0% by mass by adjusting hot-air inlet temperature of a spray dryer, flow speed of a suspension used for spray drying, and other conditions. Moreover, drying loss of the water dispersible agricultural chemical granule can also be controlled to 0.1 to 5.0% by mass by adjusting drying temperature, drying time and other conditions at redrying process in which the water dispersible agricultural chemical granule is further redried with use of a fluidized bed dryer, for example, after spray drying to obtain the water dispersible agricultural chemical granule whose drying loss is larger than 5.0% by mass.

The volume median diameter of a dispersed substance (whose main component is typically an agricultural chemical active component) in an aqueous dispersion prepared by diluting the water dispersible agricultural chemical granule with water is preferably ranging from 0.1 to 3.0 $\mu$m in order to enhance the effectiveness of the agricultural chemical active component.

The agricultural chemical active component used in the present invention is not particularly limited, as long as the agricultural chemical active component has a melting point ranging from 55 to 100°C. Using the agricultural chemical active component having a melting point ranging from 65 to 95°C, specifically from 70 to 90°C, provides improved productivity and dispersion stability in water of the water dispersible agricultural chemical granule.

Examples of the agricultural chemical active component used in the present invention include the following.

Herbicides: phenoxypropionic acid type compounds such as quizalofop-P-tefuryl (melting point from 59 to 68°C), propaquizafop (melting point from 62 to 65°C), quizalofop-ethyl (melting point from 91.7 to 92.1°C), quizalofop-P-ethyl (low melting point crystal, melting point from 76 to 77°C), quizalofop-P-ethyl (high melting point crystal, melting point from 80 to 82°C), fenoxaprop-ethyl (melting point from 85 to 87°C), fenoxaprop-P-ethyl (melting point from 89 to 91°C), haloxyfop-methyl (melting point from 55 to 57°C) and haloxyfop-ethyl (melting point from 58 to 61°C); tepraloxydim (melting point from 73 to 74°C), indanofan (melting point from 60 to 61.1°C), dimethametryn (melting point at 65°C), dithiopyr (melting point from 65 to 67°C), benefin (melting point at 66°C), amiprophosmethyl (melting point from 66 to 67°C), napropamide (melting point at 69.5°C), NIP (melting point from 70 to 71°C), thenylchlor (melting point from 72 to 74°C), fentrazamide (melting point at 79°C), isopropazole (melting point from 79.5 to 80.5°C), simetryn (melting point from 82 to 83°C), ametryn (melting point from 84 to 86°C), 2,4-D (melting point from 85 to 87°C), pyributicarb (melting point from 85.7 to 86.2°C), bifenox (melting point from 87 to 88°C), oxadiazon (melting point at 90°C), propanil (melting point from 92 to 93°C), XR-874 (test name, melting point from 92 to 93°C), linuron (melting point, from 93 to 94°C), MCPP (melting point from 94 to 95°C), etobenzanid (melting point at 94.5°C), and MCPB (melting point at 100°C).

Insecticides: tebufenpyrad (melting point from 61 to 62°C), bifenthrin (melting point from 68 to 70.6°C), dimethylvinphos (melting point from 69 to 70°C), polynactins (melting point from 70 to 71°C), PMP (melting point at 72°C), benzomate (melting point at 73°C), MTMC (melting point from 74 to 75°C), phenisobromolate (melting point at 77°C), methomyl (melting point from 78 to 79°C), dicofol (melting point at 79°C), cypermethrin (melting point at 80.5°C), acephate (melting point from 82 to 89°C), DEP (melting point from 83 to 84°C), bensultap (melting point from 83 to 84°C), PHC (melting point from 84 to 87°C), endosulfan (melting point from 84 to 88°C), chlorfenson (melting point at 87°C), amitraz (melting point from 87 to 88°C), MIPC (melting point from 88 to 93°C), pirimicarb (melting point at 90.5°C), chlorfenapyr (melting point from 91 to 92°C), CVMP (melting point from 94 to 97°C), and XMC (melting point from 99 to 100°C).

Bactericides: triflumizole (melting point at 63.5°C), microbutanil (melting point from 68 to 69°C), metalaxyl (melting point from 71.8 to 72.3°C), tolclofosmethyl (melting point from 78 to 80°C), difenoconazole (melting point at 78.6°C), triadimefon (melting point at 82.3°C), hymexazol (melting point at 86°C), metominostrobin (melting point from 87 to 89°C), imibenconazole (melting point from 89.5 to 90°C), ipconazole (melting point from 91 to 92°C), mepronil (melting point from 92 to 93°C), kresoxim-methyl (melting point from 97.2 to 101.7°C), and dazomet (melting point at 99.5°C).

The above-described agricultural chemical active components may be used singly or in combination. Moreover, the total amount of the agricultural chemical active component having a melting point ranging from 55 to 100°C is usually ranging from 0.1 to 95% by mass, preferably from 1 to 90% by mass, and more preferably from 5 to 80% by mass of the water dispersible agricultural chemical granule.

Among these agricultural chemical active components, herbicides, specifically phenoxypropionic acid type compounds are preferable. Quizalofop-ethyl, quizalofop-P-ethyl, quizalofop-P-tefuryl, fenoxaprop-ethyl, fenoxaprop-P-ethyl, propaquizalofop, haloxyfop-methyl and haloxyfop-ethyl are more preferable; quizalofop-ethyl and quizalofop-P-ethyl are much more preferable; and quizalofop-P-ethyl is the most preferable.

Surfactants used in the present invention are not particularly limited, and examples of the surfactants include following (A), (B), (C), (D) and (E).

(A) Nonionic surfactants:

(A-1) Polyethylene glycol type surfactants:
Examples of polyethylene glycol type surfactants include polyoxyethylene alkyl (C12 - 18) ether, ethylene oxide adduct of alkylnaphthol, polyoxyethylene (mono or di) alkyl (C8 - 12) phenyl ether, formaldehyde condensation product of polyoxyethylene (mono or di) alkyl (C8 - 12) phenyl ether, polyoxyethylene (mono, di, or tri) phenyl phenyl ether, polyoxyethylene (mono, di, or tri) benzyl phenyl ether, polyoxypropylene (mono, di, or tri) benzyl phenyl ether, polyoxyethylene (mono, di, or tri) styryl phenyl ether, polyoxypropylene (mono, di or tri) styryl phenyl ether, a polymer of polyoxyethylene (mono, di, or tri) styryl phenyl ether, a polyoxyethylene polyoxypropylene block polymer, an alkyl (C12 - 18) polyoxyethylene polyoxypropylene block polymer ether, an alkyl (C8 - 12) phenyl polyoxyethylene polyoxypropylene block polymer ether, polyoxyethylene bisphenyl ether, polyoxyethylene resin acid ester, polyoxyethylene fatty acid (C12 - 18) monoester, polyoxyethylene fatty acid (C 12 - 18) diester, polyoxyethylene sorbitan fatty acid (C 12 - 18) ester, ethylene oxide adduct of glycerol fatty acid ester, ethylene oxide adduct of castor oil, ethylene oxide adduct of hardened caster oil, ethylene oxide adduct of alkyl (C12 -18) amine and ethylene oxide adduct of fatty acid (C12- 18) amide.

(A-2) Polyvalent alcohol type surfactants:
Examples of polyvalent alcohol type surfactants include glycerol fatty acid ester, polyglycerin fatty acid ester, pentaerythritol fatty acid ester, sorbitol fatty acid (C12 - 18) ester, sorbitan fatty acid (C12 -18) ester, sucrose fatty acid ester, polyvalent alcohol alkyl ether, and fatty acid alkanol amide.

(A-3) Acetylene type surfactants:
Examples of acetylene type surfactants include acetylene glycol, acetylene alcohol, ethylene oxide adduct of acetylene glycol and ethylene oxide adduct of acetylene alcohol.

(A-4) Other surfactants: Examples include alkylglucoside.

(B) Anionic surfactants:

(B-1) Carboxylic acid type surfactants:
Examples of carboxylic acid type surfactants include polyacrylic acid, polymethacrylic acid, polymaleic acid, a copolymer of maleic acid and olefin (for example, isobutylene and diisobutylene), a copolymer of acrylic acid and itaconic acid, a copolymer of methacrylic acid and itaconic acid, a copolymer of maleic acid and styrene, a copolymer of acrylic acid and methacrylic acid, a copolymer of acrylic acid and methyl acrylate, a copolymer of acrylic acid and vinyl acetate, a copolymer of acrylic acid and maleic acid, N-methyl-fatty acid (C12 - 18) sarcosinate, carboxylic acids such as resin acid and fatty acid (C 12 - 18) and the like, and salts of these carboxylic acids.
(B-2) Sulfate ester type surfactants:
Examples sulfate ester type surfactants include alkyl (C12 - 18) sulfate ester, polyoxyethylene alkyl (C12-18) ether sulfate ester, polyoxyethylene (mono or di) alkyl (C8- 12) phenyl ether sulfate ester, sulfate ester of a polyoxyethylene (mono or di) alkyl (C8- 12) phenyl ether polymer, polyoxyethylene (mono, di, or tri) phenyl phenyl ether sulfate ester, polyoxyethylene (mono, di, or tri) benzyl phenyl ether sulfate ester, polyoxyethylene (mono, di, or tri) styryl phenyl ether sulfate ester, sulfate ester of a polyoxyethylene (mono, di, or tri) styryl phenyl ether polymer, sulfate ester of a polyoxyethylene polyoxypropylene block polymer, sulfated oil, sulfated fatty acid ester, sulfated fatty acid, sulfate ester of sulfated olefin and the like, and salts of these sulfate esters.
(B-3) Sulfonic acid type surfactants:
Examples of sulfonic acid type surfactants include paraffin (C12 - 22) sulfonic acid, alkyl (C8 - 12) benzene sulfonic acid, formaldehyde condensation product of alkyl (C8 - 12) benzene sulfonic acid, formaldehyde condensation product of cresol sulfonic acid, α-olefin (C14 - 16) sulfonic acid, dialkyl (C8 - 12) sulfosuccinic acid, lignin sulfonic acid, polyoxyethylene (mono or di) alkyl (C8 - 12) phenyl ether sulfonic acid, polyoxyethylene alkyl (C 12 - 18) ether sulfosuccinate half ester, naphthalene sulfonic acid, (mono, or di) alkyl (C1 - 6) naphthalene sulfonic acid, formaldehyde condensation product of naphthalene sulfonic acid, formaldehyde condensation product of (mono, or di) alkyl (C 1 - 6) naphthalene sulfonic acid, formaldehyde condensation product of creosote oil sulfonic acid, alkyl (C8 - 12) diphenyl ether disulfonic acid, Igepon T (trade name), polystyrene sulfonic acid, sulfonic acids of a styrene sulfonic acid - methacrylic acid copolymer and the like, and salts of these sulfonic acids
(B-4) Phosphate ester type surfactants:
Examples of phosphate ester type surfactants include alkyl (C8 - 12) phosphate ester, polyoxyethylene alkyl (C12-18) ether phosphate ester, polyoxyethylene (mono or di) alkyl (C8 - 12) phenyl ether phosphate ester, phosphate ester of a polyoxyethylene (mono, di, or tri) alkyl (C8- 12) phenyl ether polymer, polyoxyethylene (mono, di, or tri) phenyl phenyl ether phosphate ester, polyoxyethylene (mono, di, or tri) benzyl phenyl ether phosphate ester, polyoxyethylene (mono, di, or tri) styryl phenyl ether phosphate ester, phosphate ester of a polyoxyethylene (mono, di, or tri) styryl phenyl ether polymer, phosphate ester of a polyoxyethylene polyoxypropylene block polymer, phosphatidyl choline, phosphate ester of phosphatidyl ethanolimine and condensed phosphoric acid (for example, such as tripolyphosphoric acid) and the like, and salts of these phosphate esters. Salts of above-mentioned (B-1) to (B-4) include alkaline metals (such as lithium, sodium and potassium), alkaline earth metals (such as calcium and magnesium), ammonium and various types of amines (such as alkyl amines, cycloalkyl amines and alkanol amines).

(C) Cationic surfactants:
Examples of cationic surfactants include alkyl amine salts and alkyl quaternary ammonium salts.
(D) Amphoteric surfactants:
Examples of amphoteric surfactants include betaine type surfactants and amino acid type surfactants.
(E) Other surfactants:
Examples of other surfactants include silicone type surfactants and fluoro surfactants.

The above-discribed surfactants may be used singly or in combination. Total amount of surfactants is usually ranging from 1 to 30% by mass, preferably from 3 to 20% by mass, and more preferably from 5. to 20% by mass of the water dispersible agricultural chemical granule.

In order to improve the efficiency of suspension transfer at spray drying and to reduce clogging of the spray nozzle by the reduction of suspension viscosity for spray drying, it is preferable that anionic surfactants and nonionic surfactants are used together. For anionic surfactants, unsaturated carboxylic acid type surfactants or sulfonic acid type surfactants are preferable. More preferable are a dialkyl sulfosuccinate, a lignin sulfonate, an alkyl naphthalene sulfonate or a polycarboxylate. Much more preferable are a dialkyl sulfosuccinate or a lignin sulfonate. For nonionic surfactants, polyethylene glycol type surfactants are preferable. More preferable are polyoxyethylene (mono, di, or tri) styryl phenyl ether or a polyoxyethylene polyoxypropylene block polymer. The most preferable combination of surfactants is consisting of a dialkyl sulfosuccinate, a lignin sulfonate, polyoxyethylene (mono, di, or tri) styryl phenyl ether and a polyoxyethylene polyoxypropylene block polymer.

Moreover, in order to increase dispersion stability in water of the water dispersible agricultural chemical granule of the present invention, the combined use of a dialkyl sulfosuccinate, a lignin sulfonate, polyoxyethylene (mono, di, or tri) styryl phenyl ether and a polyoxyethylene polyoxypropylene block polymer is preferable.

Mineral powders and water-soluble powders can optionally be added to the water dispersible granule of the present invention as fillers. Examples of mineral powders used in the present invention include diatomaceous earth, talc, clay, bentonite, calcium carbonate. Examples of water-soluble powders used in the present invention include saccharides, urea and various types of salts. Saccharides include lactose, fructose, and glucose. Salts include alkali metal salts and ammonium salts of sulfuric acid, phosphoric acid, hydrochloric acid, nitric acid or carbonic acid. These powders may be used singly or in combination.

In addition, auxiliary agents such as a binding agent, stabilizing agent, coloring agent and antifoaming agent may optionally be added.

The water dispersible agricultural chemical granule of the present invention can be prepared by the method described below. The agricultural chemical active component having a melting point ranging from 55 to 100°C, surfactants and optionally fillers and other auxiliary agents are added to an appropriate amount of water, and then the resultant mixture is pulverized with the use of wet milling machine. Pulverization can be performed with the use of wet milling machine such as ball mill and sand grinder. If excessive foaming at wet pulverization occurred, the wet pulverization can be preformed without surfactants which cause foaming. Then after the wet pulverization is completed, the aqueous suspension may be prepared by adding surfactants which cause foaming. For example, surfactants which cause foaming include surfactants having the ability to reduce the surface tension largely. Specific examples include a dialkyl sulfosuccinate, an alkylbenzene sulfonate and an alkyl sulfate ester salt. The water dispersible agricultural chemical granule can be obtained by spray drying of the resultant aqueous suspension with the use of a spray dryer. In addition, the water dispersible agricultural chemical granule can optionally be redried with the use of a dryer such as a fluidized bed dryer. In order to improve dispersion stability in water of the water dispersible agricultural chemical granule, the hot-air inlet temperature at spray drying is preferably controlled to lower than or equal to the melting point of the agricultural chemical active component. More preferably, the hot-air inlet temperature at spray drying is controlled from higher than or equal to the temperature which is 20°C lower than the melting point of the agricultural chemical active component to lower than or equal to the melting point of the agricultural chemical active component.

Examples

The present invention will be further illustrated in more detail by way of examples, although the present invention is not limited thereto. In what follows, the unit "parts" refers to parts by mass. Measurement of the volume median diameter, drying loss and viscosity are performed under following each measurement condition. Measurement of volume median diameter
Model name: particle size analyzer LS-13320, manufactured by Beckman Coulter, Inc.
Measurement method: laser diffraction and scattering
Measurement of drying loss
Model name: infrared moisture determination balance FD-240, manufactured by Kett Electric Laboratory
Measurement method: detection of weight loss by heating and drying
Drying temperature: 105°C
Measurement of viscosity
Model name: Brookfield digital rheometer DV-III, manufactured by Brookfield Engineering Laboratories, Inc.
Measurement method: Rotating type (No. 2 rotor, rotating speed 30 rpm)
Measurement temperature: 25°C

Example 1

After 10 parts of sodium lignin sulfonate (Ufoxan 3A (trade name), manufactured by Borregaard), 2.5 parts of sodium dioctyl sulfosuccinate (GeroponSDS (trade name), manufactured by Rhodia), 1.0 part of a mixture of polyoxyethylene styryl phenyl ether and a polyoxyethylene polyoxypropylene block polymer (SORPOL3353 (trade name), manufactured by Toho Chemical Industry Co., Ltd.), 1.4 parts of kaolin clay (ASP200 (trade name), manufactured by ENGELHARD Corp.) and 0.1 parts of an antifoaming agent (Flowet PL80 (trade name), manufactured by Clariant Corp.) were dissolved and dispersed into 50 parts of water, 35 parts of quizalofop-P-ethyl (low melting point crystal, melting point at 76°C) was added and the resultant mixture was wet-pulverized with the use of a sand grinder (Dynomill (trade name), manufactured by W.A. Bachofen) to obtain a suspension. Then, the resultant suspension was spray-dried under a temperature of 58°C measured at the hot-air inlet with the use of a spray dryer (FOC-20 (trade name), manufactured by Ohkawara Kakohki Co., Ltd.), and redried with the use of a fluidized bed dryer (manufactured by Fuji Paudal Co., Ltd.) to obtain a water dispersible agricultural chemical granule of the present invention. Drying loss of the obtained water dispersible agricultural chemical granule was 2.7% and the volume median diameter of the dispersed substance in the aqueous dispersion was 1.8 μm.

Example 2

A suspension was prepared in the same manner as Example 1. The suspension was spray-dried under a temperature of 70°C measured at the hot-air inlet with the use of the spray dryer (FOC-20 (trade name), manufactured by Ohkawara Kakohki Co., Ltd.), and then redried with the use of the fluidized bed dryer (manufactured by Fuji Paudal Co., Ltd.) to obtain a water dispersible agricultural chemical granule of the present invention. Drying loss of the obtained water dispersible agricultural chemical granule was 2.6% and the volume median diameter of the dispersed substance in the aqueous dispersion was 1.7 μm.

Example 3

A suspension was prepared in the same manner as Example 1. The suspension was spray-dried under a temperature of 83°C measured at the hot-air inlet with the use of the spray dryer (FOC-20 (trade name), manufactured by Ohkawara Kakohki Co., Ltd.), and then redried with the use of the fluidized bed dryer to obtain a water dispersible agricultural chemical granule of the present invention. Drying loss of the obtained water dispersible agricultural chemical granule was 2.1 % and the volume median diameter of the dispersed substance in the aqueous dispersion was 2.0 μm.

Example 4

After 10 parts of sodium lignin sulfonate (Kraftsperse EDF-450 (trade name), manufactured by Westvaco Corp.), 2.5 parts of sodium diisopropyl naphthalene sulfonate (Supragil WP (trade name), manufactured by Rhodia), 1.0 part of a mixture of polyoxyethylene styryl phenyl ether and a polyoxyethylene polyoxypropylene block polymer (SORPOL3353 (trade name), manufactured by Toho Chemical Industry Co., Ltd.), 1.4 parts of kaolin clay (ASP200 (trade name), manufactured by ENGELHARD Corp.) and 0.1 parts of the antifoaming agent (Flowet PL80 (trade name), manufactured by Clariant Corp.) were dissolved and dispersed into 50 parts of water, 35 parts of quizalofop-P-ethyl (low melting point crystal, melting point at 76°C) was added and the resultant mixture was wet-pulverized with the use of a sand grinder (Ready Mill (trade name), manufactured by Aimex Co., Ltd.) to obtain a suspension. Then, the resultant suspension was spray-dried under a temperature of 60°C measured at the hot-air inlet with the use of a spray dryer (SD-1000 (trade name), manufactured by Tokyo Rikakikai Co., Ltd.), to obtain a water dispersible agricultural chemical granule of the present invention. Drying loss of the obtained water dispersible agricultural chemical granule was 2.5% and the volume median diameter of the dispersed substance in the aqueous dispersion was 0.6 μm.

Example 5

After 4.0 parts of sodium polycarboxylate (GeroponT/36 (trade name), manufactured by Rhodia), 1.0 part of sodium dioctyl sulfosuccinate (GeroponSDS (trade name), manufactured by Rhodia), 1.0 part of a mixture of polyoxyethylene styryl phenyl ether and a polyoxyethylene polyoxypropylene block polymer (SORPOL3353 (trade name), manufactured by Toho Chemical Industry Co., Ltd.), 8.9 parts of kaolin clay (ASP200 (trade name), manufactured by ENGELHARD Corp) and 0.1 parts of the antifoaming agent (Flowet PL80 (trade name), manufactured by Clariant Corp.) were dissolved and dispersed into 50 parts of water, 35 parts of quizalofop-P-ethyl (low melting point crystal, melting point at 76°C) was added and the resultant mixture was wet-pulverized with the use of the sand grinder (Ready Mill (trade name), manufactured by Aimex Co., Ltd.) to obtain a suspension. Then, the resultant suspension was spray-dried under a temperature of 60°C measured at the hot-air inlet with the use of the spray dryer (SD-1000 (trade name), manufactured by Tokyo Rikakikai Co., Ltd.) to obtain a water dispersible agricultural chemical granule of the present invention.

Example 6

After 5.0 parts of sodium polycarboxylate (GeroponT/36 (trade name), manufactured by Rhodia), 1.0 part of sodium diisopropyl naphthalene sulfonate (Supragil WP (trade name), manufactured by Rhodia), 1.0 part of a mixture of polyoxyethylene styryl phenyl ether and a polyoxyethylene polyoxypropylene block polymer (SORPOL3353 (trade name), manufactured by Toho Chemical Industry Co., Ltd.), and 7.5 parts of kaolin clay (ASP200 (trade name), manufactured by ENGELHARD Corp.) were dissolved and dispersed into 50 parts of water, 35 parts of quizalofop-P-ethyl (low melting point crystal, melting point at 76°C) was added and the resultant mixture was wet-pulverized with the use of the sand grinder (Ready Mill (trade name), manufactured by Aimex Co., Ltd.) to obtain a suspension. Then, the resultant suspension was spray-dried under a temperature of 60°C measured at the hot-air inlet with the use of the spray dryer (SD-1000 (trade name), manufactured by Tokyo Rikakikai Co., Ltd.) to obtain a water dispersible agricultural chemical granule of the present invention.

Example 7

After 5.0 parts of sodium polycarboxylate (GeroponT/36 (trade name), manufactured by Rhodia), 2.5 parts of sodium diisopropyl, naphthalene sulfonate (Supragil WP (trade name), manufactured by Rhodia) and 7.5 parts of kaolin clay (ASP200 (trade name), manufactured by ENGELHARD Corp.) were dissolved and dispersed into 50 parts of water, 35 parts of quizalofop-P-ethyl (low melting point crystal, melting point at 76°C) was added and the resultant mixture was wet-pulverized with the use of the sand grinder (Ready Mill (trade name), manufactured by Aimex Co., Ltd.) to obtain a suspension. Then, the resultant suspension was spray-dried under a temperature of 60°C measured at the hot-air inlet with the use of the spray dryer (SD-1000 (trade name), manufactured by Tokyo Rikakikai Co., Ltd.) to obtain a water dispersible agricultural chemical granule of the present invention.

Comparative Example 1

Seventy parts of quizalofop-P-ethyl (low melting point crystal, melting point at 76°C), 20 parts of sodium lignin sulfonate (Ufoxan 3A (trade name), manufactured by Borregaard), 5.0 parts of sodium dioctyl sulfosuccinate (GeroponSDS (trade name), manufactured by Rhodia), 2.0 parts of a mixture of polyoxyethylene styryl phenyl ether and a polyoxyethylene polyoxypropylene block polymer (SORPOL3353 (trade name), manufactured by Toho Chemical Industry Co., Ltd.), 2.8 parts of kaolin clay (ASP200 (trade name), manufactured by ENGELHARD Corp.) and 0.2 parts of the antifoaming agent (Flowet PL80 (trade name), manufactured by Clariant Corp.) were mixed, and then the resultant mixture was dry-pulverized with the use of the jet mill (AO-Jet (trade name), manufactured by Seishin Enterprise Co., Ltd.). As a result, no water dispersible agricultural chemical granule could be produced because the pulverized material did not be obtained due to the agglomeration of the materials within the jet mill.

Comparative Example 2

A water dispersible agricultural chemical granule was obtained in a similar manner to Example 1 except that no redrying with the use of a fluidized bed dryer was performed. Drying loss of the obtained water dispersible agricultural chemical granule was 7.7% and the volume median diameter of the dispersed substance in the aqueous dispersion was 2.0 μm.

Comparative Example 3

A water dispersible agricultural chemical granule was obtained in a similar manner to Example 2 except that no redrying with the use of a fluidized bed dryer was performed. Drying loss of the obtained water dispersible agricultural chemical granule was 5.6% and the volume median diameter of the dispersed substance in the aqueous dispersion was 1.9 μm.

Comparative Example 4

A water dispersible agricultural chemical granule was obtained in a similar manner to Example 3 except that no redrying with the use of a fluidized bed dryer was performed. Drying loss of the obtained water dispersible agricultural chemical granule was 5.8% and the volume median diameter of the dispersed substance in the aqueous dispersion was 2.3 μm.

Comparative Example 5

After 8.1 parts of sodium lignin sulfonate (REAX 88B (trade name), manufactured by MeadWestvaco Corp.), 0.9 parts of sodium diisopropyl naphthalene sulfonate (Supragil WP (trade name), manufactured by Rhodia), 1.43 parts of kaolin clay (ASP200 (trade name), manufactured by ENGELHARD Corp.) and 0.05 parts of the antifoaming agent (Flowet PL80 (trade name), manufactured by Clariant Corp.) were dissolved and dispersed into 55 parts of water, 1.37 parts of 1-(N,N-dimethylsulfamoyl)-3-(2-methyl-3-bromo-6-fluoroindole-1-yl)sulfonyl-1,2,4-triazole (a bactericidal active compound described in WO 99/021851; melting point at 129 °C) and 32.26 parts of water dispersible powder of manzeb (Dithanedithane M45 (trade mane), manzeb content 80%, manzeb: a bactericidal active compound and maintains solid state up to a decomposition temperature of 204 °C) was added and the resultant mixture was wet-pulverized with the use of the sand grinder (Ready Mill (trade name), manufactured by Aimex Co., Ltd.) to obtain a suspension. Then, the resultant suspension was spray-dried under a temperature of 90 °C measured at the hot-air inlet with the use of the spray dryer (FOC-20 (trade name), manufactured by Ohkawara Kakohki Co., Ltd.), and redried with the use of the fluidized bed dryer (manufactured by Fuji Paudal Co., Ltd.) to obtain a water dispersible agricultural chemical granule. Drying loss of the obtained water dispersible agricultural chemical granule was 3.5% and the volume median diameter of the dispersed substance in the aqueous dispersion was 1.2 μm.

Comparative Example 6

A water dispersible agricultural chemical granule was obtained in a similar manner to Example 5 except that no redrying with the use of a fluidized bed dryer was performed. Drying loss of the obtained water dispersible agricultural chemical granule was 10.3% and the volume median diameter of the dispersed substance in the aqueous dispersion was 1.2 μm.

Test Example 1: Dispersion Stability in Water

Each water dispersible agricultural chemical granule prepared in Examples and Comparative Examples was measured to 1.0 g. A measured water dispersible agricultural chemical granule was poured into a 100 ml stoppered measuring cylinder which contained 100 ml of hard water having hardness 19.2, and then the measuring cylinder was inverted by 20 times with frequency of one inversion per 2 seconds to prepare an aqueous dispersion. After 30 minutes, the deposit amount, measured in ml, of the aqueous dispersion was measured by reading off the value on the measuring cylinder scale. It shows that the smaller the value of the deposit (unit: ml) is, the better stability the aqueous dispersion has.

Test Example 2: Degree of Fineness

Each water dispersible agricultural chemical granule of 1.0 g was measured, and the measured water dispersible agricultural chemical granule was tested by a wet-sieving test by the use of a 45-μm sieve. The residue on the sieve was transferred to an evaporating dish and the residue was dried. After drying, the mass of the dried residue was measured. The ratio of the material passed though the sieve was calculated by the following formula as a degree of fineness.

$$\text{Degree of fineness (\%)} = (1 - A/50) \times 100$$

A: Mass of the dried residue on the sieve (g)
Results of Test Example 1 and Test Example 2 are shown in Table 1.

[Table 1]

TABLE 1

| | Melting Point of Agricultural Chemical Active Component (°C) | Hot-Air Inlet Temperature (°C) | Drying Loss (%) | Amount of Deposit (ml) | Degree of Fineness (%) | Volume Median Diameter[*1] (μm) |
|---|---|---|---|---|---|---|
| Example 1 | 76 | 58 | 2.7 | 0.10 | 99.7 | 1.8 |
| Example 2 | 76 | 70 | 2.6 | <0.10 | 99.8 | 1.7 |
| Example 3 | 76 | 83 | 2.1 | 0.25 | 99.6 | 2.0 |
| Example 4 | 76 | 60 | 2.5 | 0.30 | 99.8 | 0.6 |
| Comparative Example 2 | 76 | 58 | 7.7 | 0.40 | 95.9 | 2.0 |
| Comparative Example 3 | 76 | 70 | 5.6 | 0.25 | 96.5 | 1.9 |
| Comparative Example 4 | 76 | 83 | 5.8 | 0.60 | 95.3 | 2.3 |
| Comparative Example 5 | 129,204[*2] | 90 | 3.5 | 0.50 | 97.6 | 1.2 |
| Comparative Example 6 | 129,204[*2] | 90 | 10.3 | 0.25 | 99.2 | 1.2 |

*1: The volume median diameter of a dispersed substance (main component: the agricultural chemical active component) in an aqueous dispersion prepared by diluting the water dispersible agricultural chemical granules with water.
*2: Decomposition Temperature (solid state lower than the decomposition temperature)

The viscosities of the suspensions produced in Examples before spray-drying are shown in Table 2.

[Table 2]

TABLE 2

| | Surfactant | | Viscosity of Suspension |
|---|---|---|---|
| Example 1 | Ufoxan3A | 10% | 366 mPaS |
| | GeroponSDS | 2.5% | |
| | Sorpo13353 | 1.0% | |

(continued)

| | Surfactant | | Viscosity of Suspension |
| --- | --- | --- | --- |
| Example 5 | GeroponT/36 | 4.0% | 1368 mPaS |
| | GeroponSDS | 1.0% | |
| | Sorpol3353 | 1.0% | |
| Example 6 | GeroponT/36 | 5.0% | 1008 mPaS |
| | Supragil WP | 1.0% | |
| | Sorpol3353 | 1.0% | |
| Example 7 | GeroponT/36 | 5.0% | 7178 mPaS |
| | SupragilWP | 2.0% | |

INDUSTRIAL APPLICABILITY

The present invention provides a water dispersible agricultural chemical granule which has good productivity and dispersion stability in water and a method for producing the same.

**Claims**

1. A water dispersible agricultural chemical granule produced by spray drying after wet pulverization of a suspension comprising an agricultural chemical active component having a melting point ranging from 55 to 100°C, a surfactant and water,
   wherein a drying loss of the water dispersible agricultural chemical granule is ranging from 0.1 to 5.0% by mass.

2. The water dispersible agricultural chemical granule according to claim 1, wherein the drying loss is ranging from 0.1 to 3.0% by mass.

3. The water dispersible agricultural chemical granule according to claim 1 or 2, wherein the meting point of the agricultural chemical active component is ranging from 70 to 90 °C.

4. The water dispersible agricultural chemical granule according to any one of claims 1 to 3, wherein a volume median diameter of a dispersed substance in an aqueous dispersion prepared by diluting the water dispersible agricultural chemical granule with water is ranging from 0.1 to 3.0 $\mu$m.

5. The water dispersible agricultural chemical granule according to any one of claims 1 to 4, wherein the surfactant is consisted of an anionic surfactant and a nonionic surfactant.

6. The water dispersible agricultural chemical granule according to claim 5, wherein the anionic surfactant is one or more selected from a group consisting of an unsaturated carboxylic acid type surfactant and a sulfonic acid type surfactant.

7. The water dispersible agricultural chemical granule according to claim 5, wherein the anionic surfactant is one or more selected from a group consisting of a dialkyl sulfosuccinate, a lignin sulfonate, an alkyl naphthalene sulfonate and a polycarboxylate.

8. The water dispersible agricultural chemical granule according to claim 5, wherein the anionic surfactant is one or more selected from a group consisting of a dialkyl sulfosuccinate and a lignin sulfonate.

9. The water dispersible agricultural chemical granule according to claim 5, wherein the nonionic surfactant is a polyethylene glycol type surfactant.

10. The water dispersible agricultural chemical granule according to claim 5, wherein the nonionic surfactant is one or more selected from a group consisting of polyoxyethylene (mono-, di-, or tri-) styryl phenyl ether and a polyoxyethylene-polyoxypropylene block polymer.

11. The water dispersible agricultural chemical granule according to any one of claims 1 to 4, wherein the surfactant is consisted of a dialkyl sulfosuccinate, a lignin sulfonate, polyoxyethylene (mono-, di-, or tri-) styryl phenyl ether and a polyoxyethylene-polyoxypropylene block polymer.

12. The water dispersible agricultural chemical granule according to any one of claims 1 to 11, wherein the agricultural chemical active component is a herbicide.

13. The water dispersible agricultural chemical granule according to claim 12, wherein the herbicide is a phenoxypropionic acid type compound.

14. The water dispersible agricultural chemical granule according to claim 12, wherein the herbicide is one or more selected from a group consisting of quizalofop-ethyl, quizalofop-P-ethyl, quizalofop-P-tefuryl, fenoxaprop-ethyl, fenoxaprop-P-ethyl, propaquizafop, haloxyfop-methyl and haloxyfop-ethyl.

15. The water dispersible agricultural chemical granule according to claim 12, wherein the herbicide is quizalofop-P-ethyl.

16. The water dispersible agricultural chemical granule according to any one of claims 1 to 15, wherein a hot-air inlet temperature at spray drying is lower than or equal to the melting point of the agricultural chemical active component.

17. The water dispersible agricultural chemical granule according to any one of claims 1 to 16, wherein the water dispersible agricultural chemical granule is produced by being redried after spray drying.

18. A method of producing a water dispersible agricultural chemical granule, comprising:

   spray drying after wet pulverization of a suspension comprising an agricultural chemical active component having a melting point ranging from 55 to 100°C, a surfactant and water so as to obtain the water dispersible agricultural chemical granule having drying loss ranging from 0.1 to 5.0% by mass.

19. The method of producing a water dispersible agricultural chemical granule according to claim 18, wherein a hot-air inlet temperature at spray drying is lower than or equal to the melting point of the agricultural chemical active component.

20. The method of producing a water dispersible agricultural chemical granule according to claim 18, further comprising:

   redrying the water dispersible agricultural chemical granule after spray drying so as to obtain the water dispersible agricultural chemical granule having the drying loss ranging from 0.1 to 5.0% by mass.

## INTERNATIONAL SEARCH REPORT

International application No.

PCT/JP2005/010968

| | |
|---|---|
| A. CLASSIFICATION OF SUBJECT MATTER<br>Int.Cl$^7$  A01N25/14, 25/30, 43/40, 43/60, 43/76 | |

According to International Patent Classification (IPC) or to both national classification and IPC

B. FIELDS SEARCHED

Minimum documentation searched (classification system followed by classification symbols)
Int.Cl$^7$  A01N25/14, 25/30, 43/40, 43/60, 43/76

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 1-226803 A  (Sumitomo Chemical Co., Ltd.),<br>11 September, 1989 (11.09.89),<br>Full text<br>(Family: none) | 1-20 |
| E,X | JP 2005-187452 A  (Nissan Chemical Industries, Ltd.),<br>14 July, 2005 (14.07.05),<br>Full text<br>(Family: none) | 1-20 |

| ☐ Further documents are listed in the continuation of Box C. | ☐ See patent family annex. |
|---|---|

| | |
|---|---|
| *     Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>06 September, 2005 (06.09.05) | Date of mailing of the international search report<br>27 September, 2005 (27.09.05) |
|---|---|
| Name and mailing address of the ISA/<br>Japanese Patent Office | Authorized officer |
| Facsimile No. | Telephone No. |

Form PCT/ISA/210 (second sheet) (January 2004)

**EP 1 908 348 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62263101 A
- JP 59029604 A
- JP 60064904 A
- JP 63022502 A
- JP 1226803 A
- WO 99021851 A